# EUROPEAN PATENT APPLICATION

(11) **EP 1 406 222 A2**
(43) Date of publication of application: **07.04.2004**
(21) Application number: 03022244.2
(22) Date of filing: 01.10.2003
(51) Int. Cl.: G07F 19/00, G06F 17/60

(54) **Method of authentication and payment, operation method of an authentication and payment system, terminal device, service providing device, authentication and payment device, and control information providing device**

(30) Priority: 01.10.2002 JP 2002289191
(71) Applicant: NTT DoCoMo, Inc., Tokyo 100-6150 (JP)
(72) Inventor: Morioka, Masashi, NTT DoCoMo, Inc., Chiyoda-ku Tokyo (JP); Etoh, Minoru, NTT DoCoMo, Inc., Chiyoda-ku Tokyo (JP); Yonemoto, Yoshifumi NTT DoCoMo, Inc., Chiyoda-ku Tokyo (JP); Suzuki, Takashi, NTT DoCoMo, Inc., Chiyoda-ku Tokyo (JP)
(74) Representative: HOFFMANN - EITLE

(57) **Abstract**

Service procedures and/ or message formats such as encryption and attachment of a digital signature are properly used according to an available amount of money defined in a certificate of service, network environments such as intensity of security, transmission band and locations of communication paths and operation policy, whereby the system enables to shorten service providing time, to adjust the intensity of security and to reduce the amount of information transmitted through the information network. It is preferable to encrypt a part of the information or to attach a digital signature to the part of the information, instead of encrypting all information or attaching the digital signature to all information. Consequently, encryption of only the important portion of the information can be available. It is further preferable to store a part of the information into a storage device, instead of containing a part of the information into the body of the message to be sent, and to contain information of the location in the storage device into the body of the message to be sent. As a result, the amount of information transmitted through the information network can be reduced. This technique is particularly effective for an attachment of low usage information.

## Description

### CROSS-REFERENCE TO RELATED APPLICATION

This application is based upon and claims the benefit of priority from the prior Japanese Patent Application No. 2002-289191, filed on October 1, 2002. The entire contents of which are incorporated herein by reference.

### BACKGROUND OF THE INVENTION

### 1. Field of the Invention

This invention relates to an authentication and payment system on an information network and elements thereof.

### 2. Description of the Related Art

Such as online shopping of beverages, foods, books and others, online distribution of music and video contents and usage of network services, those use the Internet or cellular phones as payment means, are so called "e-commerce". E-commerce now has become widely used around the world. This e-commerce enables us to purchase products or to use software services without cash payment. Conventional procedures of e-commerce are described in patent publication (1) (Japanese Laid-open PatentApplication 2001-148048) and non-patent publication (1) ("MeT WAP Shopping", http://www.mobiletransaction.ord/pdf/R11/Met-WAP-Shopping-R11.pdf). These prior arts describe methods of payment carried out for each transaction.

However, these methods cannot satisfy required conditions in purchasing some kinds of products or services. For instance, when a user purchases a beverage outside by using a cellular phone, he/she claims to obtain it immediately. Under the present circumstances, however, it takes a few seconds or a few tens of seconds from the beginning to the end of the purchasing procedure. It keeps the user to wait for a minute.

In order to solve the present problem, non-patent publication (2) (Matt Blaze, John Ioannidis and Angelos D. Keromytis, "Offline Micropayments without Trusted Hardware",
http://www.crypto.com/papers/knpay.pdf) proposes a method of offline payment wherein products are provided preceding payment according to the policy and the sum of their price. This method proposes that settlers do not settle for each trade but carry out plural settlements en bloc.

Since there is a time lag between a usage of service and its settlement, even if amount of money for each service is small, the total payment for a user tends to reach high when he/she repeats to use the service many times. In this case, the service provider, called "provisional agent", has to bear the risk.

On the other hand, patent publication 2 (Japanese Patent No. 3,224,784) proposes a technique that enables dynamical arrangement of message flow and message format. The technique enables adaptation of service providing flow and/or message format according to the requirements and restrictions of application as specified in policy rules. In this prior art, service providing server publishes its service specification to service clients that request service according to the published specification. Accordingly, it realizes a system that has flexibility in providing a service, and properly judges whether or not to provide a service using a coupon, which includes information of communication history.

### SUMMARY OF THE INVENTION

An object of the present invention is to provide a new technique that can carry out a risk management in accordance with situations such as users' acceptable waiting time, network environments and operation policies in a procedure of requiring authentication and payment on an information network.

The first aspect of the present invention is a method of authentication and payment in an authentication and payment system that has a terminal, at least one server and a network connecting these terminal and server, the method that is carried out by the server comprising the steps of: receiving a request for usage of a service from the terminal through the information network; selecting at least one situation from a plural situations of a content described in a service certificate sent from the terminal, a network environment and a system policy; and changing a service procedure and/or a message format so as to operate the authentication and payment system according to the selected situation.

The second aspect of the present invention is a terminal comprising: a receiver configured to receive a first certificate of service including related information from an authentication and payment device through an information network; and a transmitter configured to manipulate the first certificate of service to generate a second certificate of service including identification information of the terminal and to transmit the second certificate of service to a service providing device through the information network.

In the second aspect of the present invention, it is possible to arrange the second certificate of service to be generated from all or a part of the first certificate of service; from all or a part of the first certificate of service and a piece of new information added thereto; from all or a part of the first certificate of service and a digital signature added thereto; or from all or a part of the first certificate of service and the piece of new information and the digital signature added thereto.

In the second aspect of the present invention, it is also possible to arrange the second certificate of service to be generated: from identification information including at least one of an identifier of certification, an identifier of an authentication and payment device and a digital signature of the authentication and payment device, which are extracted from the first certificate of service; from the identification information and a piece of new information added thereto; or from the identification information and the piece of new information and a digital signature added thereto.

The third aspect of the present invention is a terminal comprising: usage history managing means configured to manage a usage history of a certificate of service distributed from an authentication and payment device through an information network; and acknowledgement means configured to acknowledge to the authentication and payment device when the usage history satisfies conditions defined in the certificate of service.

The fourth aspect of the present invention is a service providing device comprising: a receiver configured to receive a certificate of service sent from a terminal through an information network; and a transmitter configured to transmit a request for authentication and payment itself or wih a digital signature to an authentication and payment device through the information network, and wherein the request for authentication and payment is to be formed from all or a part of the certificate of service or from all or a part of the certificate of service and a piece of new information added thereto.

In the fourth aspect of the present invention, it is possible to arrange the request for authentication and payment to be formed from identification information including at least one of an identifier of the certificate of service, an identifier of the authentication and payment device and a digital signature of the authentication and payment device, which are extracted from the certificate of service, or from the identification information and a piece of new information added thereto; and the request for authentication and payment is transmitted itself or with a digital signature added thereto.

In the fourth aspect of the present invention, it is possible for the service providing device to further comprise: a controller configured to select timing of providing a service in response to the request from the terminal or timing of processing the request for authentication and payment to the authentication and payment device, or configured to simplify the processing of the request for authentication and payment.

In the fourth aspect of the present invention, it is also possible for the service providing device to further comprise: another receiver configured to receive a first certificate of service from the terminal through the information network; and another transmitter configured to generate a second certificate of service by adding a piece of new information to the first certificate of service and to transmit the generated second certificate of service to the terminal through the information network.

The fifth aspect of the present invention is an authentication and payment device comprising: certificate of service issuing means for issuing a certificate of service to other device; and processing means for processing at least one of verification of a request for authentication and payment sent from other device through an information network, authentication of the received request for authentication and payment, permission for provision of service that is requested by the request for authentication and payment, and payment for the provision of service.

In the fifth aspect of the present invention, it is possible to arrange the certificate of service to contain at least one piece of information of an identifier of the certificate of service, an identifier of the authentication and payment device, an identifier of the other device, information of expiration date of the certificate of service, and information of constraint of service to the other device.

In the fifth aspect of the present invention, it is possible for the authentication and payment device to further comprise: information storing means for storing all or a part of information which is inherently to be contained in the certificate of service as a stored information, and wherein the certificate of service contains information of a location of the stored information in the information storing means.

In the fifth aspect of the present invention, it is also possible for the authentication and payment device to further comprise: a transmitter configured to transmit the certificate of service to the other device in response to a request therefrom or in accordance with a predetermined condition for transmission.

In the fifth aspect of the present invention, it is further possible to arrange the certificate of service issuing means to update a content of the certificate of service along with an update of information under the control of the authentication and payment device, and the transmitter to transmit the updated certificate of service to the other device.

The sixth aspect of the present invention is an operation method of an authentication and payment system including a terminal, a service providing device, an authentication and payment device and an information network connecting these devices, comprising the steps of: receiving a request for use of a service from the terminal through the information network; analyzing a content of a certificate of service to be sent to the terminal, a network environment and/or a system operation policy; and adapting service procedures and/or message formats to at least one of plural situations of the content of the certificate of service, the network environment and the system operation policy.

The seventh aspect of the present invention is a control information providing device comprising: receiving means of a request for use of a service; analyzing means of a content of a certificate of service, a network environment and/ or a system operation policy; and control information generating means configured to generate control information adaptive to at least one of plural situations of the content of the certificate of service, the network environment and the system operation policy.

In the seventh aspect of the present invention, it is possible for the control information providing device to further comprise: open means configured to open the control information generated by the control information generating means to the information network.

In the seventh aspect of the present invention, it is possible to arrange the control information to contain a piece of information of an identifier.

According to the present invention, service procedures and/or message formats such as encryption and attachment of digital signature are properly used, in accordance with available amount of money defined in a certificate of service, network environments such as intensity of security, transmission band and locations of communication paths, and operation policy, whereby the present invention enables to shorten a service providing time, to adjust the intensity of security and to reduce the amount of information transmitted through the information network.

In this case, it is preferable to encrypt a part of the information or to attach a digital signature to a part of the information, instead of encrypting all of the information or attaching the digital signature to all of the information. Consequently, encryption of only the important portion of the information can be available.

It is further preferable to store a part of the information into a storage device, instead of containing a part of the information into the body of the message to be sent, and to contain information of the location in the storage device into the body of the message to be sent. As a result, the amount of information transmitted through the information network can be reduced. This technique is particularly effective for attaching information of low usage.

According to the present invention, an authentication and payment device trusted by a terminal and a service providing device issues to the terminal a certificate of service with a digital signature, which contains credential information required in the processing of authentication, permission of service provision and payment by the service providing device and auxiliary information. On the other hand, the terminal transmits to the service providing device the certificate of service issued by the authentication and payment device with the digital signature and additional information thereto. Accordingly, in the condition that the risk is small, it is possible for the service providing device to provide a service preceding complicated processing of authentication, permission of the service and processing of payment. In this procedure, merely processing of guaranteeing the customer by the authentication and payment device and verifying the digital signature attached thereto by the service providing device are required beforehand.

Further, in this case, it is possible to reduce amount of information transmitted through an information network by extracting inevitable information from the certificate of service and transferring only it.

It is further possible to arrange the service providing device to add information to the certificate of service sent from the terminal and to transmit it to the authentication and payment device. As a result, it becomes possible for the authentication and payment device to carry out updating of customer information and payment processing and to update content of the certificate of service.

Moreover, it is possible to arrange the authentication and payment device to transmit the certificate of service to the terminal when it updates the customer information, or to update periodically the content of the certificate of service. As a result of this arrangement, the terminal can always store the certificate of service reflecting the up-to-date information, and the risk of the service providing device can be reduced.

According to the present invention, furthermore, a terminal can gain a service interface such as service flow and message format from a control information providing device, which generates and publishes control information adaptive to situations, and the terminal can operate according to the gained service interface. As a result, it becomes possible for the terminal to provide a flexible request for service flexibly adaptive to the situations. In this case, it is possible to arrange the terminal to add a unique identifier to the service interface. By this arrangement, it becomes possible to identify the service interface by the unique identifier, and in case wherein the terminal repeatedly uses the service of the same interface, the number of downloads of the same service interface can be reduced. Furthermore, by arranging the control information providing device to attach a digital signature to the service interface, it becomes possible to prevent repudiation of the service interface and to guarantee completeness.

Additionally, by arranging the control information providing device to generate a software program based on the information of service interface and to run the software program in the terminal, the terminal is not required to understand the description of the service interface for its operation. Moreover, by arranging the control information providing device to generate a software program complying with functions of the terminal, it becomes possible to reduce the size of the software program. As this result, the amount of information transmitted through the information network and the space of memory area consumed in the terminal can be reduced.

Further, by arranging the control information providing device to cache the software program generated therein and, in case wherein the same software program is requested, to read out the software program from the cache memory in order to transmit it, reduction of the product-cost and -time of the software program becomes achievable.

### BRIEF DESCRIPTION OF THE DRAWINGS

FIG. 1 is a schematic diagram showing an authentication and payment system of the first embodiment of the present invention.
FIG. 2 is a schematic diagram showing an authentication and payment device in the authentication and payment system of the first embodiment.
FIG. 3 is a schematic diagram showing a terminal in the authentication and payment system of the first embodiment.
FIG. 4 is a schematic diagram showing a service providing device in the authentication and payment system of the first embodiment.
FIG. 5 is a schematic diagram showing a control information providing device in the authentication and payment system of the first embodiment.
FIG. 6 is a program list describing a service procedure used in the authentication and payment system of the first embodiment.
FIG. 7 is a program list describing a message format used in the authentication and payment system of the first embodiment.
FIG. 8 is a flowchart showing procedures of message transmission and receipt in the authentication and payment system of the first embodiment.
FIG. 9 is a flowchart showing procedures of service request from the terminal to the service providing device in the authentication and payment system of the first embodiment.
FIG. 10 is a diagram of a service manual to be transmitted from the terminal to the service providing device in the authentication and payment system of the first embodiment.
FIG. 11 is a flowchart showing processing of service provision to the terminal and request for authentication and payment processing to the authentication and payment device carried out by the service providing device.
FIG. 12 is a detailed flowchart of the request for authentication and payment processing according to FIG. 11.
FIG. 13 is a detailed flowchart of a batch processing of the request for authentication and payment according to FIG. 11.
FIG. 14 is a flowchart showing processing of issue of a certificate of service and request for authentication and payment carried out by the authentication and payment device.
FIG. 15 is a program list of a certificate of service in the authentication and payment system of the first embodiment.
FIG. 16 is a detailed diagram of update processing of the certificate of service in the authentication and payment system of the first embodiment.
FIG. 17 is a schematic diagram showing a terminal provided with plural types of network interfaces.
FIG. 18 is a program list describing characteristic information such as a bandwidth of the information network and a capability of security in the authentication and payment system of the first embodiment.
FIG. 19 is a program list describing a policy of the terminal in the authentication and payment system of the first embodiment.
FIG. 20 is a program list describing WSDL in the authentication and payment system of the first embodiment.
FIG. 21 is a program list describing CC/IP in the authentication and payment system of the first embodiment.

### DETAILED DISCRIPTION OF THE PREFERED EMBODIMENT OF THE PRESENT INVENTION

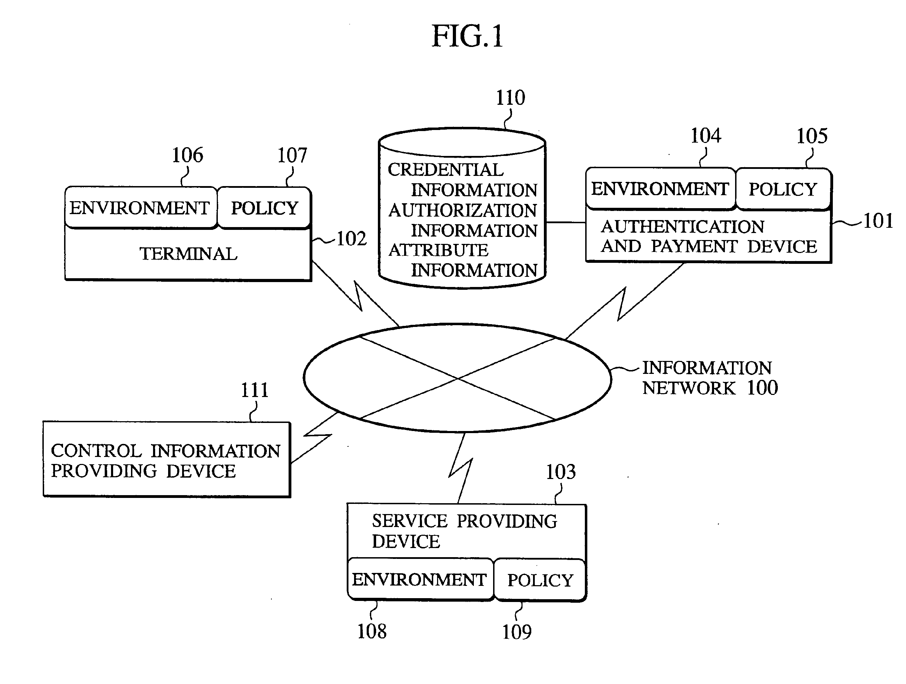

Hereinafter, the present invention will be described with reference to the drawings. FIG. 1 illustrates the whole scheme of an authentication and payment system of the first embodiment of the present invention. This system includes an authentication and payment device 101, a terminal 102, a service providing device 103 and a control information providing device 111. The service providing device 103 provides services. The terminal 102 receives provisions of the services from the service providing device 103. The authentication and payment device 101 is entrusted by the service providing device 103 as well as the terminal 102, and issues a certificate of service that is required when authentication processing and/or payment processing are carried out. The control information providing device 111 generates and/or publishes control information of a terminal.

These elements are connected each other by an information network 100 such as the Internet in order to transmit and receive data among them. The information network 100 includes wired networks as well as wireless network. Transmission protocols such as XML, SOAP, SMTP and/or HTTP on TCP/IP are used for transmission and receipt of messages written using XML through the information network 100, and the messages are transmitted by using these transmission protocols. However, other equivalent protocols and message formats are also usable.

Each element of the authentication and payment system of the present invention has environment 104,106 or 108 and policy 105,107 or 109 for network connection. The environment is such as performance of the terminal, type and bandwidth of the network and transmission rate. The policy is such as requirement for security strength to messages transmitted on a communication channel, requirement for rate and response speed.

The authentication and payment device 101 is a device to be located on a settlement organization or the like. The authentication and payment device 101 includes a database 110, which is for credential management, authorization management and management of attribute information of a user who operates the terminal 102 and/or of the terminal 102 itself. This authentication and payment device 101 issues a certificate of service including information such as permission of service based on the credential information, the authorization information, the attribute information and so on.

The control information is generated and/or published by the control information providing device 111. A procedure of request for service and/or a service request message format, which are used when the terminal 102 sends the service request to the service providing device 103 are described in this control information. It is possible to arrange the service providing device 103 to work as the control information providing device 111.

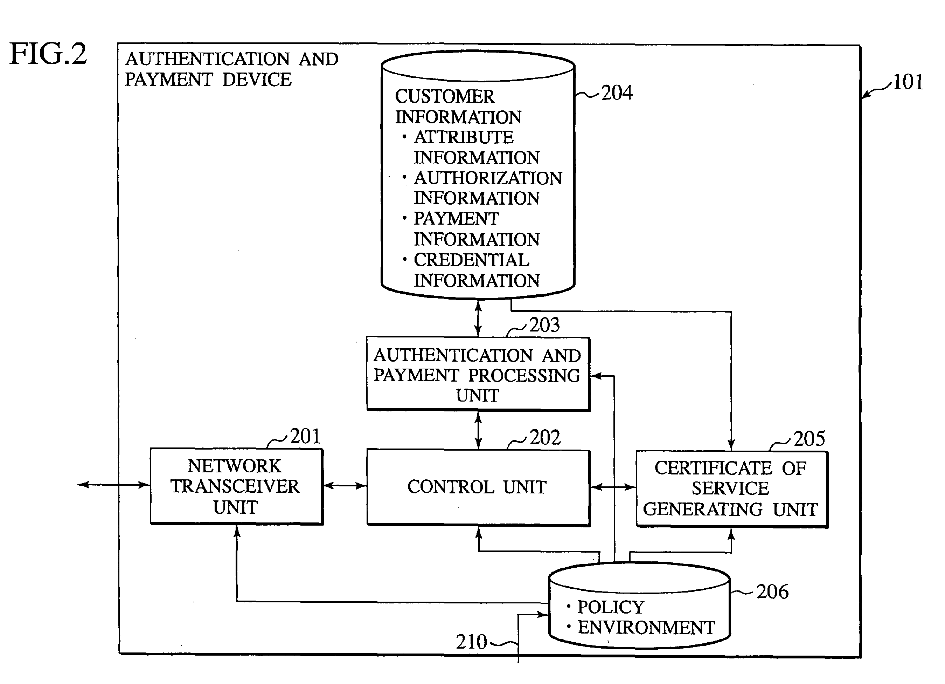

FIG. 2 illustrates a functional scheme of the authentication and payment device 101. A network transceiver unit 201 controls data-input and -output against the network, and transmits and receives data between the terminal 102 as well as the service providing device 103. A control unit 202 controls each unit in the device 101, performs various operations, and temporally stores data. An authentication and payment processing unit 203 updates various information such as the attribute information of customers, the authorization information, the payment information and the credential information, those are stored in a customer information managing unit 204. A certificate of service generating unit 205 generates the certificate of service to the terminal 102 by referring to the information stored in the customer information managing unit 204. A policy and environment information managing unit 206 manages the policy of the authentication and payment device 101 and situations of network connection. The information managed by this policy and environment information managing unit 206 affects the network transceiver unit 201, the control unit 202, the authentication and payment processing unit 203 and the certificate of service generating unit 205. In FIG. 2, an arrow 210 from the outside to the policy and environment information managing unit 206 shows an input of the environment information.

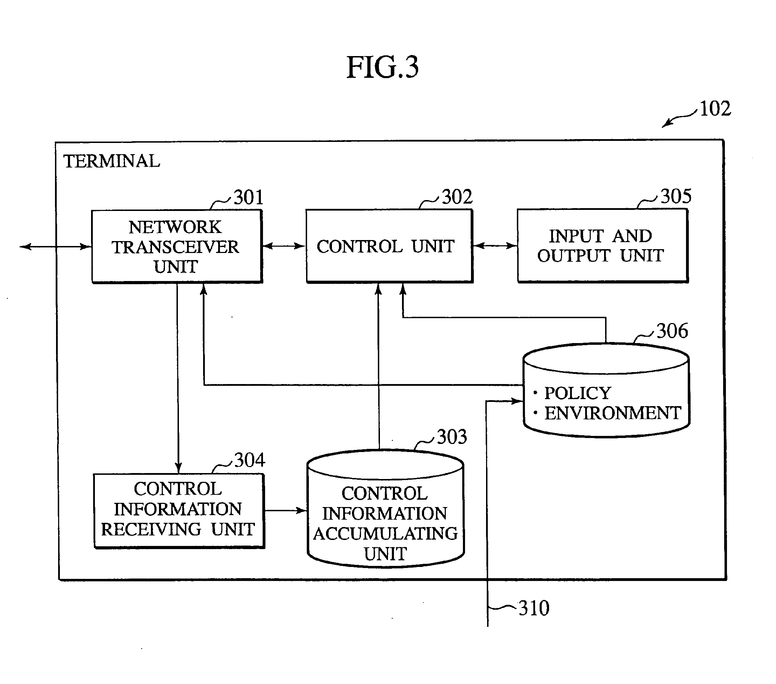

Referring to FIG. 3, the terminal 102 will be explained. A network transceiver unit 301 controls data-input and -output against the information network 100 in order to transmit and receive the data against the authentication and payment device 101 as well as the service providing device 103. Plural network connections are permissible. A control unit 302 controls each unit in the terminal 102, performs various operations, and temporally stores data. A control information receiving unit 304 stores terminal control information into a control information accumulating unit 303 when it receives that information. An input and output unit 305 is to be connected with a liquid crystal display, a keyboard and other input- or output-devices. A policy and environment information managing unit 306 manages the policy of the user of the terminal 102 and/or of the terminal itself, and the situations of the network connections. The information managed by this policy and environment information managing unit 306 affects the network transceiver unit 301 and the control unit 302. In FIG. 3, an arrow 310 from the outside to the policy and environment information managing unit 306 shows an input of environment information.

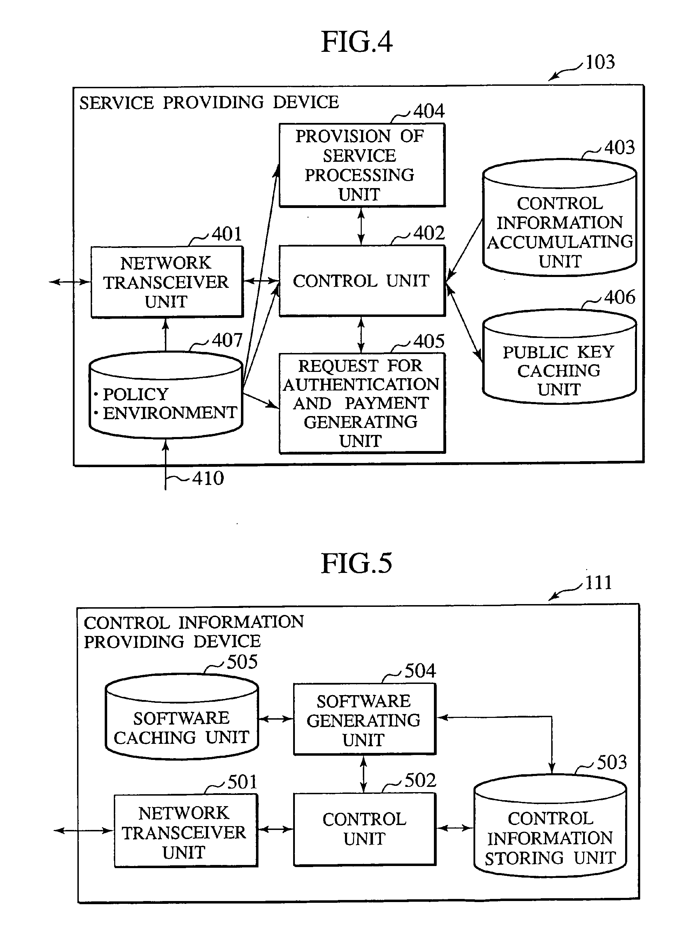

Referring to FIG. 4, the service providing device 103 will be explained. A network transceiver unit 401 controls data-input and - output against the information network 100 in order to transmit and receive the data against the terminal 102 as well as the authentication and payment device 101. A control unit 402 controls each unit in the service providing device 103, performs various operations, and temporally stores data according to control information stored in a control information accumulating unit 403. A provision of service processing unit 404 processes provisions of services and distributions of contents. A request for authentication and payment generating unit 405 generates a message requiring authentication and payment processing to the authentication and payment device 101. A public key caching unit 406 caches a public key data, which is necessary for processing digital signature and encryption. A policy and environment information managing unit 407 manages the policy of a service provider and/ or the service providing device 103 itself, and the situations of the network connection. The information managed by the policy and environment information managing unit 407 affects the control unit 402, the provision of service processing unit 404 and the request for authentication and payment generating unit 405. In FIG. 4, an arrow 410 from the outside to the policy and environment information managing unit 407 shows an input of the environment information.

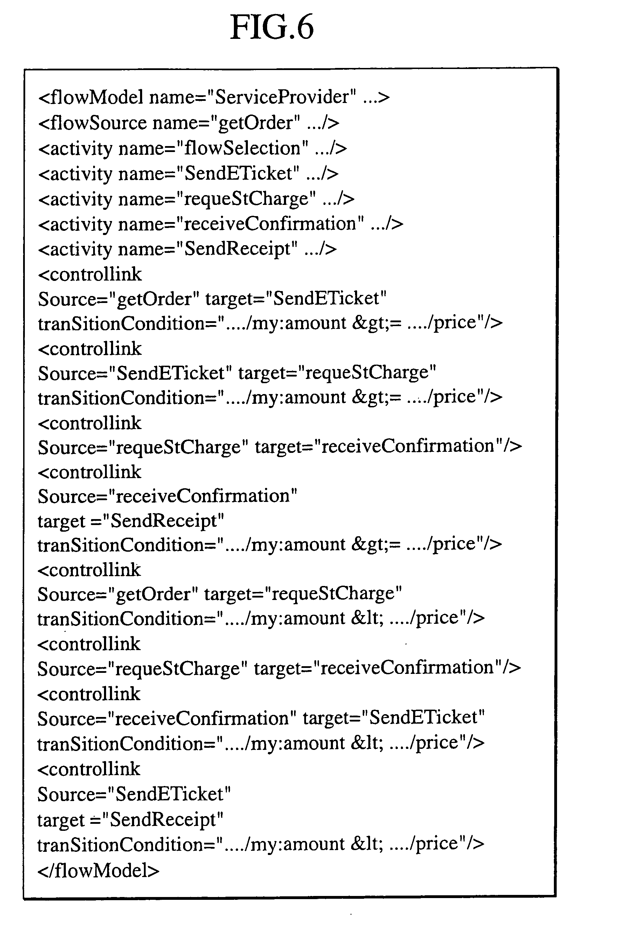

Referring to FIG. 5, the control information providing device 111 will be explained hereinafter. A network transceiver unit 501 controls data-input and -output against the information network 100, and also transmits to and receives from the terminal 102 or the service providing device 103. A control unit 502 controls each unit in this device 111, operates various calculations and temporally stores various data. A control information storing unit 503 stores information for controlling the terminal 102 from the service providing device 103 or other devices. In response to a request for control information received through the network transceiver unit 501, this control information storing unit 503 retrieves the information stored therein to send out it. A software generating unit 504 generates software programs based on the information stored in the control information storing unit 503. A software caching unit 505 caches the software programs generated by the software generating unit 504. This caching function can reduce the total amount of processing of generating the same software program. In order to prevent forgery of the control information, it is preferable to attach the identifier or the generator's signature to the control information to be published.

The control information providing device 111 as set forth above is a device for generating and/or publishing the control information. Therefore, this control information providing device 111 sends the control information to the terminal 102 in response to the request for control information therefrom by using a suitable protocol for acquisition of information such as HTTP (Hiper Text Transfer Protocol). The control information generated by the control information providing device 111 describes a procedure of a request for service and a message format that are required when the terminal 102 requests the service providing device 103 for a service. The terminal 102 operates in accordance with the information received from the control information providing device 111.

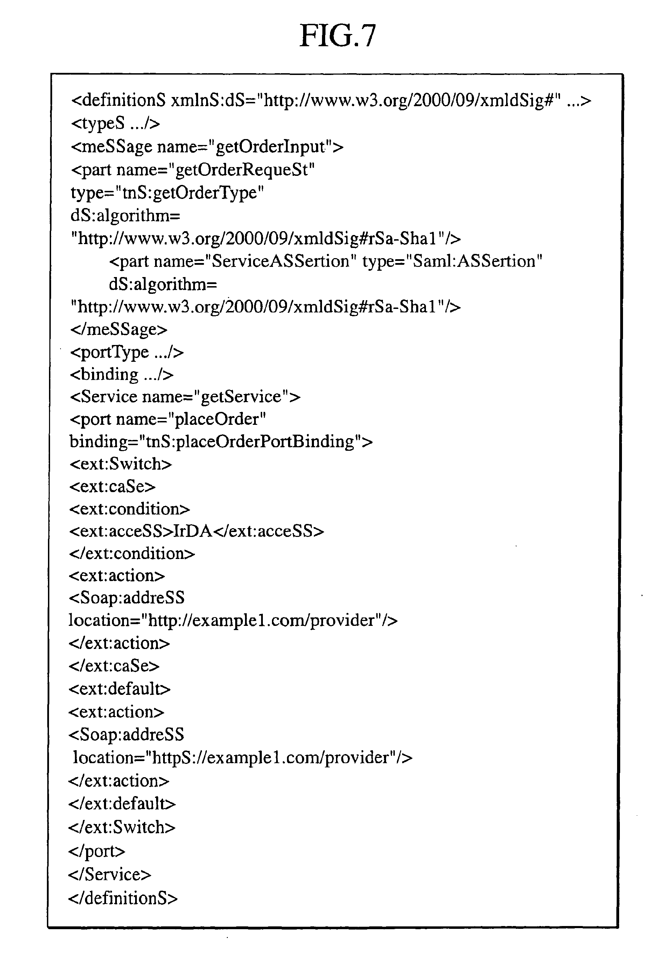

This control information is described so as that different service procedures or message formats can be used according to situations such as environments and policies. Accordingly, it is possible to change or to simplify the service procedure according to the situations. As the description languages for the control information, WSDL (Web Services Description Language), WSFL (Web Services Flow Language) and others are applicable. FIG. 6 illustrates a sample of WSFL description, and FIG. 7 illustrates a sample of WSDL description.

The description in FIG. 6 describes a procedure of:
(1) comparison between a payment amount and a reference amount defined in a certificate of service, which is generated by the authentication and payment device 101;
(2) provision of service preceding the payment processing in case wherein the payment amount is smaller than the reference amount; and
(3) execution of payment preceding the provision of service in the other case.

The description in FIG. 7 describes a procedure of connection between the terminal 102 and the service providing unit 103 (1) without using SSL in case wherein the network 100 uses IrDA connection and (2) with using SSL in other cases. An XML signature is attached to the message "Service Assertion". It should be noted that the definition of the reference amount and the description of the network environment are mere examples. Therefore, they are not restricted thereto. For instance, it is possible to use a location or other environment information. Furthermore, not only the environment information, the policy such as preference information of a user of the terminal or of the service providing device is also usable.

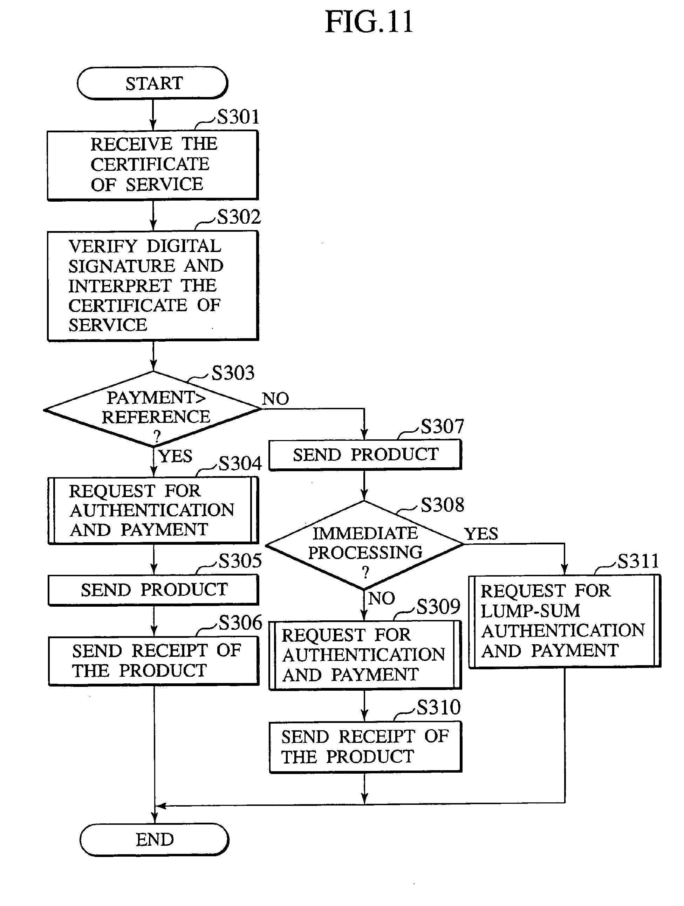

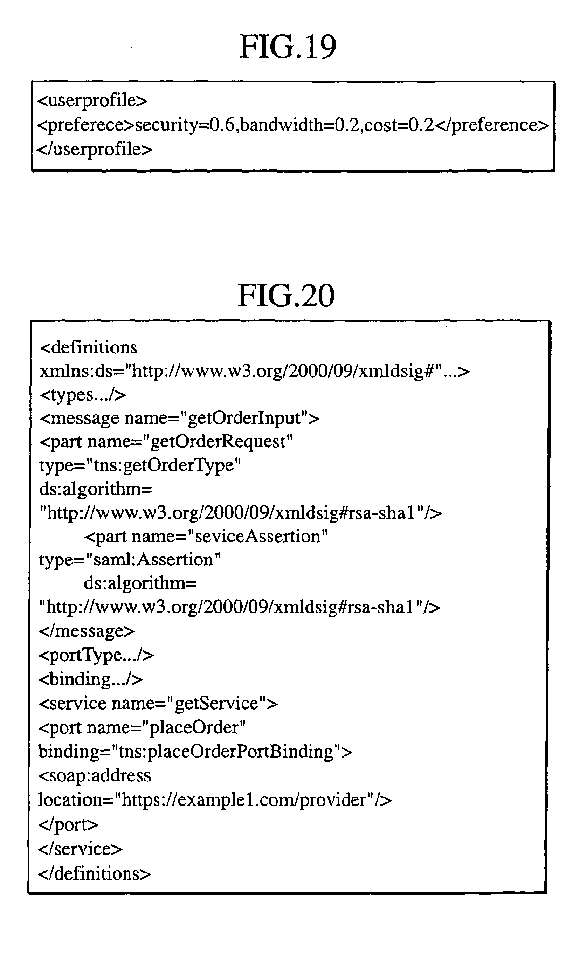

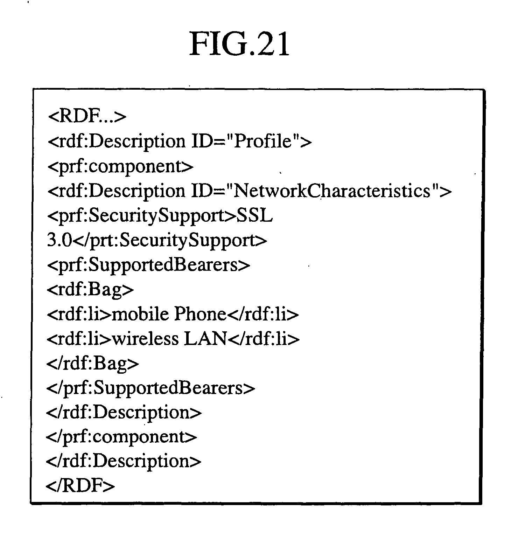

It is also possible to arrange the terminal 102 to inform its abilities such as whether or not it can use SSL, XML-signature and/or XML-encryption to the control information providing device 111 on the acquisition of the control information as set forth above, and the service providing device 111 to change the control information according to the abilities and transmit it to the terminal 102. As another example of this change, instead of sending WSDL as shown in FIG. 11 to the terminal 102, it is possible to arrange the control information device 111 to generate WSDL description relevant to the ability of the terminal 102 and send the WSDL description as shown in FIG. 20 to the terminal 102. It is arranged here that WSDL description that necessarily uses SSL is generated for a terminal without the ability of IrDA. In this case, the ability of the terminal is informed by using CC/PP. An example of CC/PP description is illustrated in FIG. 21.

Furthermore, it is possible to arrange the terminal 102 not to operate according to the control information as set forth above, but to obtain a software program containing information equivalent to the control information and run the software in order to realize required operations. Additionally, to meet with this arrangement, it is also possible to arrange the control information providing device 111 to provide the software program to the terminal. Moreover, in generating the software program, it is possible to arrange the software program so as to contain every function described by WSDL or WSFL, or, based on interpretation of WSDL or WSFL description, so as to contain only necessary functions correspondent to the ability of the terminal. As a language for the software program to be generated here, JAVA (a product name), for instance, is usable.

Hereinafter, the overall operation of the authentication and payment system of the preferred embodiment will be explained. The procedure of service and message format in the system and each device therein are defined according to the control information, and the order of processing is not bound by a specific procedure. However, for explanation of operation of each device, a typical service providing and request method adaptive to a certain situation will be explained.

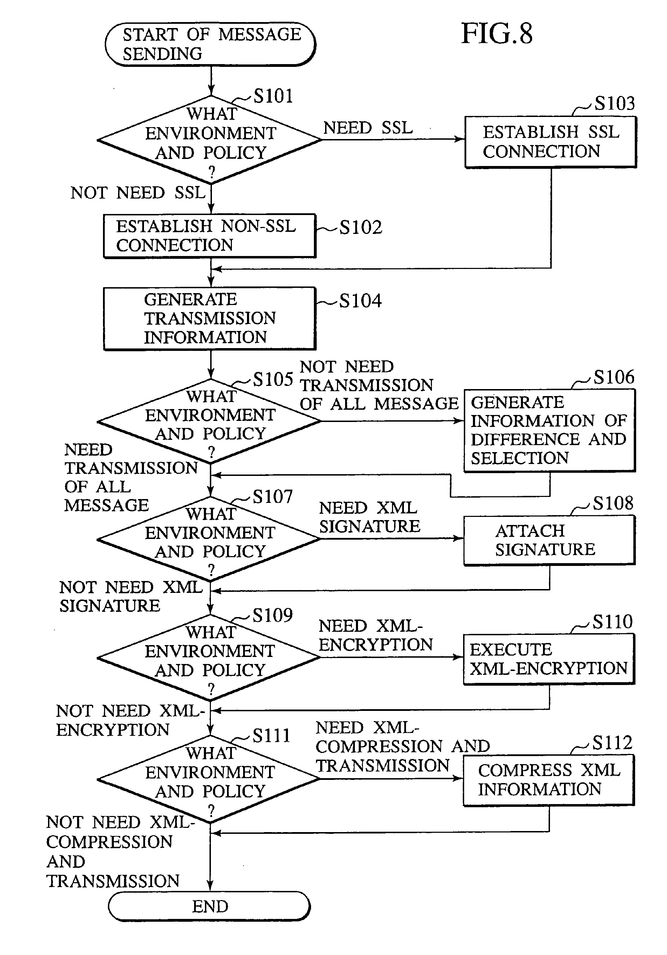

FIG. 8 illustrates a procedure of transmission and recipient of a message carried out in each device. In this procedure, each device properly decides usage of service providing methods such as SSL (Secure Socket Layer), a digital signature, an encryption system and compression of the information.

In the steps S101 through S 103, a device judges whether or not the strength of security is necessary to be raised according to a type of network obtained from information of a network message format, an amount of calculation required for SSL processing and information of a user's preference whether he/she attaches importance to the security or the speed of a payment. When the device decides that the increase of the strength of security is necessary, it establishes a connection by SSL. By using this method, it is possible to properly select use or non-use of SSL according to the case wherein the increase of strength of security is necessary, such as the case of using the Internet for communications between the terminal 102 and the service providing device 103, or the case wherein the guarantee of the security is sufficient, such as the case of using the infrared communications between them because they are located very closely. Consequently, it becomes possible to assure the security for a network of insufficient security and the high-speed processing for a network of sufficient security.

In step S104, each device generates a transmission message. In steps S 105 and S106, the device judges whether partial information or all information is to be sent according to information of connection speed of the network and the result of comparison between the amount of data to be sent when the partial information is sent and that of all of the information is sent. In case wherein the transmission of all information is not necessary, the device generates necessary data by processing of extraction of the solely necessary information or of the different information from that of transmitted in the preceding time. Consequently, it becomes possible to reduce the amount of information transmitted through the network and shorten the processing time.

In the steps S107 and S108, the device judges whether or not attachment of an XML signature is necessary according to the function of the terminal 102 and the policy of the service providing device 103 and a user. In case wherein the attachment is judged necessary, the device attaches an XML signature to the message. This is for the reason as set forth hereinafter.

In case wherein a tamperproof terminal and a secured network are used, it is possible to prevent a negation of the terminal user without attachment of a digital signature. Therefore, the speed-up of processing is achievable by not attaching the digital signature to the message. To the contrary, in case wherein a terminal of non-tamperproof or an unsecured transmission channel is used, it is necessary to attach a digital signature to the message in order to prevent the negation of the user.

In the steps S109 and S S110, the device judges whether or not an XML encryption is necessary according to the type of the network 100, the calculation capability of the terminal 102 and preferences of the terminal 102 and the service providing device 103. In case wherein the XML encryption is judged necessary, the XML encryption algorithm encrypts the message. By this processing, it becomes possible to properly select the security level, such as encrypting a part of the message.

In the steps S111 and S112, the device switches XML compressions of the generated message. By the compression, it becomes possible to reduce the amount of information and reduce the transmission delay especially on low bandwidth channels. It should be noted that the procedure shown in the flowchart of FIG. 8 is an example, and the usage of SSL, XML signature and XML encryption is not necessarily required.

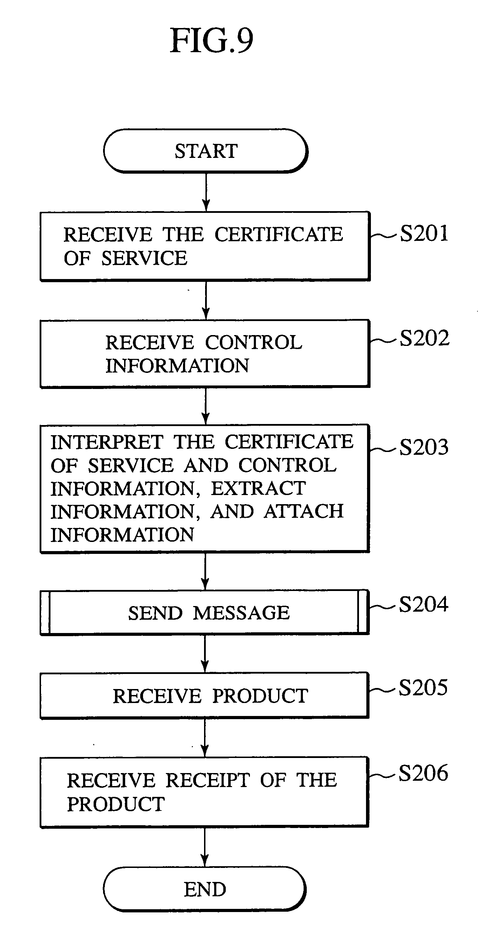

FIG. 9 illustrates a flowchart of a procedure of a request for service from the terminal 102 to the service providing device 103. In the step S201, the terminal 102 receives a certificate of service from the authentication and payment device 101. It is not necessary to receive the certificate from the device 101 at the time of request for service, and it is allowable to obtain the certificate beforehand. It is also allowable that the terminal 102 receives the certificate from the authentication and payment device 101 in response to the request thereto or the authentication and payment device 101 voluntarily sends it to the terminal 102.

In the step S202, the terminal 102 obtains control information from the control information providing device 111. It is not necessary to obtain the control information at the time of request for service, and it is allowable to obtain beforehand. Further, it is not necessary to obtain the control information by an explicit manner, and it is also allowable to obtain it with a message of transmission and recipient of a menu of product selection, in which the information is included. Moreover, it is possible to arrange the terminal 102 to have a typical control information therein beforehand in order not to need to obtain the information from the control information providing device 111. It is further allowable to arrange the terminal 102 to obtain the control information in a form of software in case wherein the control information is published in the form of software.

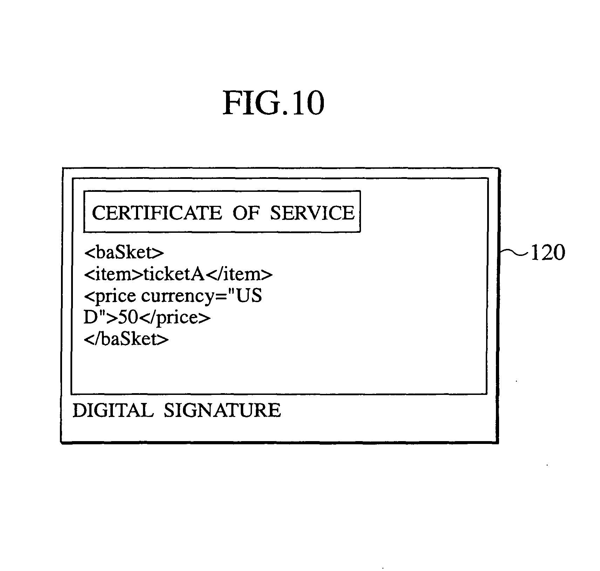

In the step S203, the terminal 102 generates a certificate of service 120 of the form as shown in FIG. 10 for sending to the service providing device 103. This certificate of service is generated by the terminal 102 by combining a content of the request for service to the service providing device 103 and a certificate of service issued by the authentication and payment device 101. An identifier of the terminal user is included in the content of the request for service. For this identifier, the same one as an identifier of the certificate of service issued by the authentication and payment device 111 is used.

For the terminal 102, it is possible to arrange the service procedure changeable according to the content of the certificate of service, its policy and environment. For instance, it is possible to send information that is capable of informing the uniqueness and reliability of the certificate of service and is needed for payment. That information is a part of information of the certificate of service, such as an identifier of the certificate of service, an identifier of the authentication and payment device 101 that has issued the certificate of service, a digital signature attached by the authentication and payment device 101 and/or information of the reference amount. It is also possible to change the processing method according to the amount of payment. In case wherein the terminal attaches a digital signature, an identifier of the signer should be the same as the identifier of the certificate of service issued by the authentication and payment device.

In case wherein manners of the request for service are different according to environments and policies, it is allowable to send to the service providing device 103 additional information relating to the environment and the policy such as the information of the network with the message of the request for service. By this attachment of the additional information, the terminal 102 becomes capable of informing its situation to the service providing device 103.

In the step S204, the terminal 102 sends to the service providing device 103 the certificate of service 120 generated by the manner as set forth above. In the steps S205 and S206, the terminal 102 receives a service or goods and a receipt from the service providing device 103.

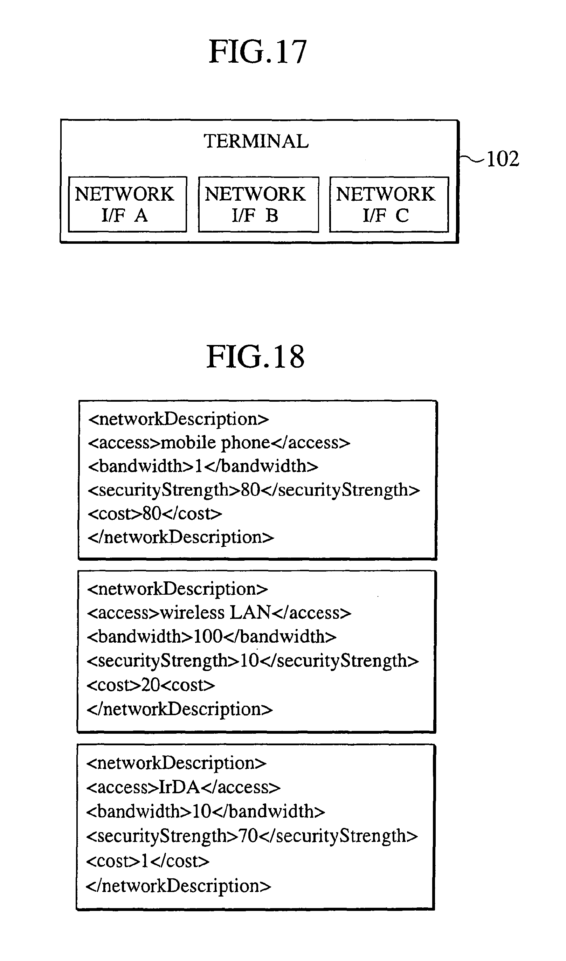

As shown in FIG. 17, as for a terminal having a plural types of network interfaces A to C for a mobile network and a wireless network, or a mobile network, a wired LAN and an infrared network, in case wherein the terminal can connect to the service providing device through any one of the interfaces, it is possible to use information of network characteristics or the policy and environment thereof for selecting a network to be used.

The information of network characteristics is provided as shown in FIG. 18 for each of the interfaces shown in FIG. 17. As shown in FIG. 8, a bandwidth and an ability of security are described as the information of network characteristics. It is allowable that the information of network characteristics is derived from the network interfaces or given from the network. Further, as for the information of network, it is not restricted to information of an access network. It is allowable to be indicated by end-to-end information or to dynamically change. The policy of the terminal is described as shown in FIG. 19, wherein a bandwidth of the user's network and information of preferences for the security and fees are described. The selection of network interface to be used is carried out by evaluating the information as shown in FIGS. 18 and 19. For instance, it can evaluate by an expression of (a parameter for the bandwidth )* 0.2+(a parameter for the security) * 0.6 + 20/(a parameter for cost). In the present case, values evaluated by the expression set forth above are respectively 48.5 for the mobile network, 27 for the wireless LAN and 64 for the IrDA, and the IrDA of the largest value is selected. It should be noted that the expression is not restricted to one as set forth above, and it is possible to evaluate by the weighted values.

In FIGS. 11 through 13, a service providing procedure to the terminal 102 and a procedure of a request for authentication and payment to the authentication and payment device 101 executed by the service providing device 103. In the step S301, the service providing device 103 receives a content and a message of a request for service from the terminal 102.

In the step S302, the service providing device 103 verifies a signature of the authentication and payment device 101 contained in the certificate of service 120 in the message of the request for service and the expiration date of the certificate of service 120. In case wherein the validation of the certificate of service 120 is confirmed, the service providing device 103 judges a situation of the terminal to select adequate flow and message format of the service provision.

In case wherein the terminal has sent a part of information extracted from the information of the certificate of service, such as an identifier of the certificate of service, an identifier of the authentication and payment device 101 that has issued the certificate of service, a digital signature attached by the authentication and payment device 101 as the information being capable of informing the uniqueness and reliability of the certificate of service 120, and the procedure of service provision can not be defined solely by these pieces of information, the service providing device can make inquires about the content of the corresponding data to the authentication and payment device 101.

Since the service providing device 103 needs a public-key certificate of the authentication and payment device 101 on the verification of the digital signature attached to the certificate of service 120, it is preferable to cache, in advance, the public-key certificate into the service providing device 103. By this treatment, the time to be consumed for obtaining the certificate can be shortened.

In the step S303, the service providing device 103 compares the reference amount described in the certificate of service 120 and the amount of payment of the requested service.

At the step S303, if the amount of payment is larger than the reference amount, the service providing device 103 generates an authentication and payment message to send to the authentication and payment device 101 in the step S304. Then, if the payment processing is successful, the service providing device 103 starts to provide the requested service in the step S305, and sends a receipt in the step S306.

On the other hand, at the step S303, if the amount of payment is equal to or smaller than the reference amount, the service providing device 103 starts providing the requested service before it generates the authentication and payment message in the step S307. In case wherein the amount of payment is very small, it is possible to simplify the payment processing, such as a lump sum authentication and payment in the steps S308 and S311. As a result, the cost of payment processing can be compressed by the lump sum payment. On the other hand, in case wherein immediate processing is selected in the step S308, a request for authentication and payment is generated for each service provision and sent to the authentication and payment device 101 in the step S309, and the receipt is sent in the step S310.

By this procedure of service provision, it becomes possible to faster the start of a service provision dependent on the amount of payment, and ensure the payment processing in case wherein the amount of payment is large and the risk of payment is comparably high. It is possible to arrange not only to change the order of service provision dependent on the situations but also to simplify the processing.

In case wherein the service is content distribution, it is possible to arrange the service providing device 103 to distribute the requested content immediately after the receipt of the request for service and at the same time start the authentication and payment processing. In this case, the service providing device 103 should be provided to immediately terminate the distribution of the content when the authentication and payment processing is failed.

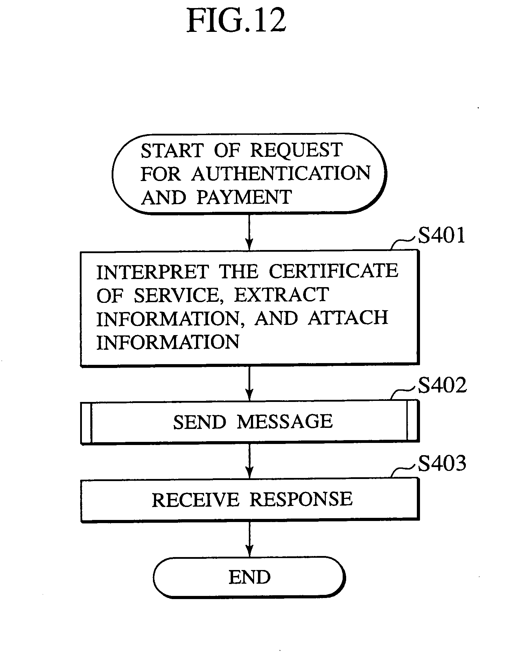

FIG. 12 illustrates a procedure of a request for authentication and payment executed by the service providing device 103 to the authentication and payment device 101. In the step S401, the service providing device 103 analyzes the certificate of service 120 received from the terminal 102, extracts the necessary information and attaches information of the amount of payment so as to generate the request for authentication and payment. The service providing device 103 sends the generated request for authentication and payment to the authentication and payment device 101 in the step S402, and receives the response to the request in the step S403.

On sending the request for authentication and payment, it is possible to send, as the information capable of informing the uniqueness and reliability of the certificate of service 120, the identifier of the certificate of service, the identifier of the authentication and payment device 101 that has issued the certificate of service 120, the digital signature attached by the authentication and payment device 101, those are a part of information of the certificate of service 120.

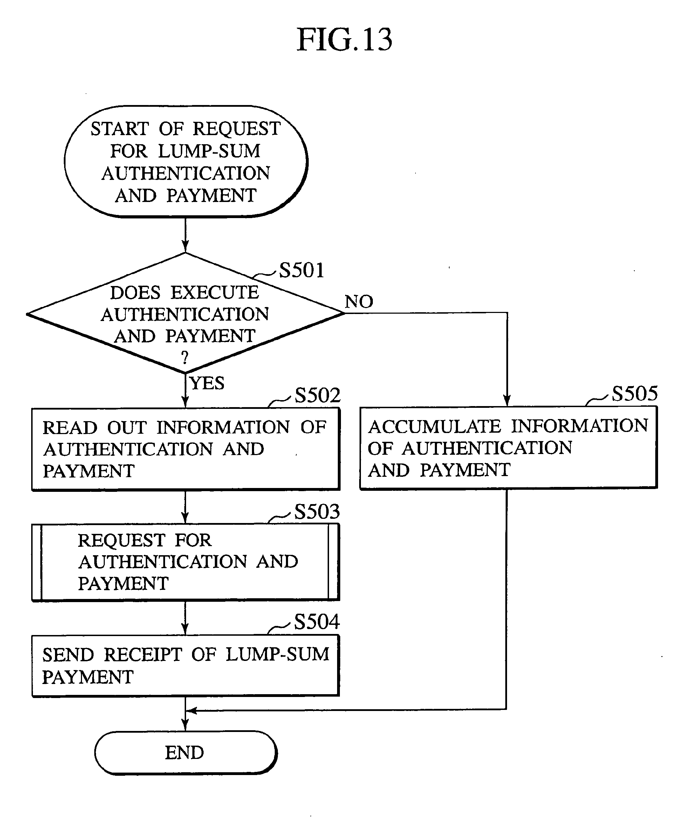

FIG. 13 illustrates a procedure of the lump sum processing to the service providing device 103. A lump sum processing for several occasions of authentication and payment is carried out according to a suitable rule, instead of execution of the authentication and payment processing for each occasion when it receives the request for service. A method of stochastic processing that is described in a thesis of L. Rivest; "Electronic Lottery Tickets as Micropayments", in Financial Cryptography: FC '97, Proceedings, R. Hirschfeld (ed.), Springer-Verlag, LNCS vol. 1318, pp. 307-314, 1998, is suitable for the lump-sum processing set forth above.

In the step S501, the service providing device 103 judges whether or not issues a request for authentication and payment. In case wherein it judges to issue the request, the service providing device 103 reads out accumulated information of the authentication and payment in the step S502, and generates the request for authentication and payment to send to the authentication and payment device 101 in the step S503. The service providing device 103 sends a receipt to the terminal 102 when the request for authentication and payment is successfully accepted by the authentication and payment device 101 in the step S504.

At the step S501, if the service providing device 103 judges not to send the request for authentication and payment, it accumulates the information of authentication and payment in the step S505 in order to prepare for other occasion of sending the request for authentication and payment.

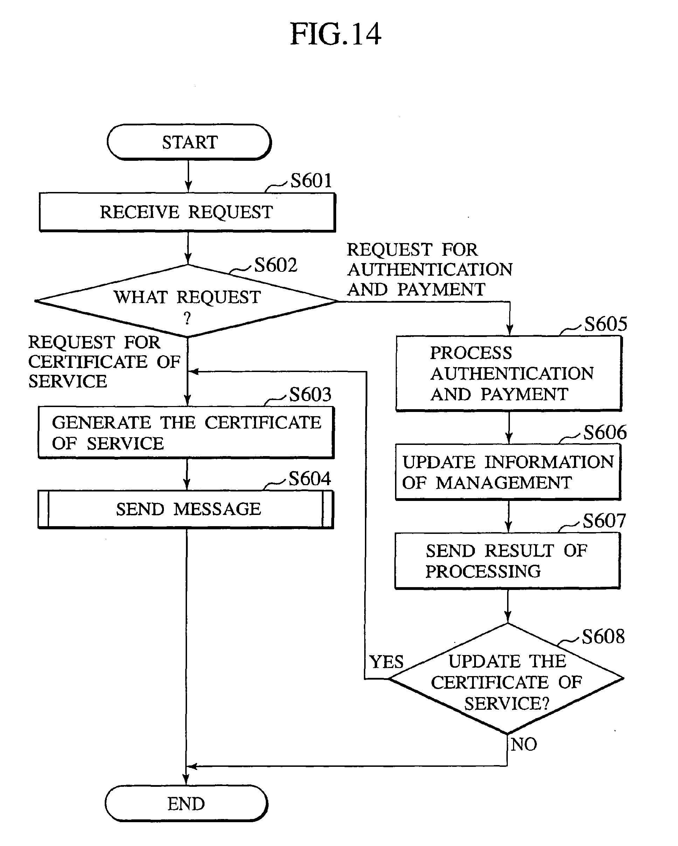

The authentication and payment device 101 receives requests from other devices and executes issue of the certificate of service 120 as shown in FIG. 10 and payment. The authentication and payment device 101 also manages various kinds of information such as information of user attributes, credential information, payment information and authentication information. FIG. 14 illustrates a procedure of issue of the certificate of service and the request for authentication and payment by the authentication and payment device 101.

In the step S601, if the authentication and payment device 101 receives a certain request from other device, it selects as the following processing dependent on whether it has received a request for a certificate of service or a request for an authentication and payment at the following step S602.

In case wherein the authentication and payment device 101 has received the request for certificate of service, the device 101 generates the certificate of service 120 according to the information related to the terminal 102 managed by this authentication and payment device 101 in the step S604.

It is possible to arrange the accumulation unit 110 to accumulate all or a part of information which should be included in the certificate of service 120 and the certificate of service itself to have information of the location where the accumulated information is stored in the accumulation unit 110. The certificate of service 120 contains the information of the reference amount. Therefore, the existence of this information of the reference amount in the certificate of service 120 is interpreted such that the authentication and payment device 101 guarantees the service provision preceding the payment processing as far as the service providing device 103 provides a thing of the price lower than the reference amount.

In the step S602, if the request for authentication and payment is received, the authentication and payment device 101 executes the processing of authentication and payment in the step S605, updates pertinent information managed by the device 101 itself if necessary in the step S606, and sends the result of success or failure of the processing in the step S607.

In the step S608, if the need of update of the certificate of service arises as the result of update of the pertinent information managed by the authentication and payment device 101, it goes to the step S603 in order to generate the certificate of service 120 for the terminal 102. The content of the certificate of service 120 is not restricted to information of the reference amount. Information for authentication such as upper limit of the number of use and information of age, information of allowance for service and/or attribute information are applicable as the content of the certificate of service 120.

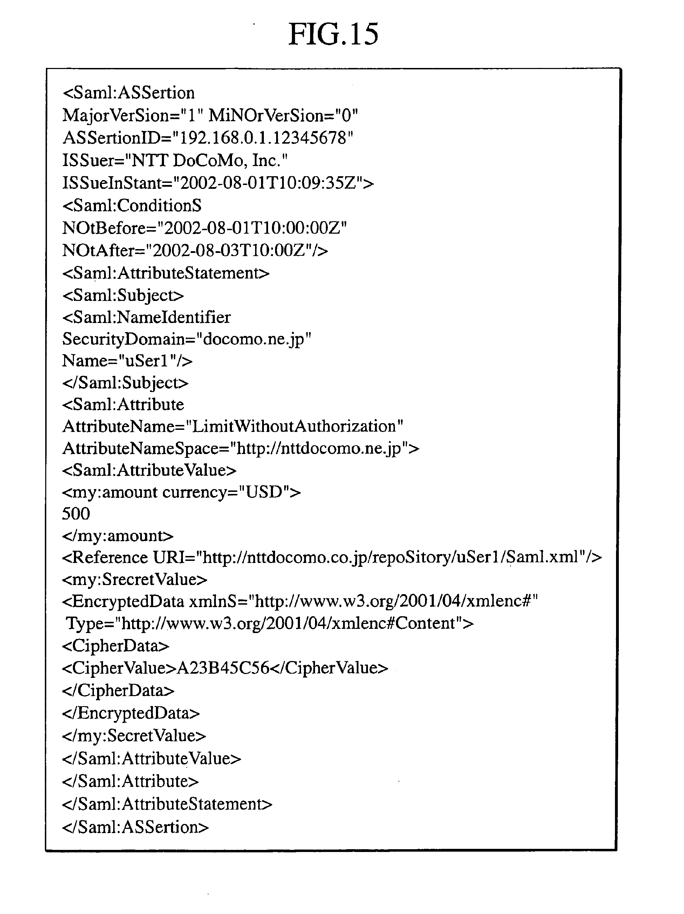

FIG. 15 illustrates an example of description of the certificate of service 120 issued by the authentication and payment device 101 to the terminal 102. This example of the certificate of service 120 is described by SAML (Security Assertion Markup Language; http://www.oasis-open.org/committe es/security/). However, it is not restricted if there are found equivalent languages to SAML. Expiration date, identifier of the authentication and payment device and unique identifier is to be contained in the certificate of service 120 in order to enable description of effectiveness of the certificate of service and detection of reuse.

Both advance payment and later payment are permissible for processing of payment. It is also possible to arrange the authentication and payment device 101 to issue the certificate of service 120 in response to the request from the terminal 102, to issue it without the request from the terminal 102 or to periodically issue it so as to update at an arbitral timing. Further, it is possible to arrange the certificate of service 120 valid for one use or for several uses. It is also possible to arrange the authentication and payment device so as to issue plural certificates of service 120 for one terminal 102.

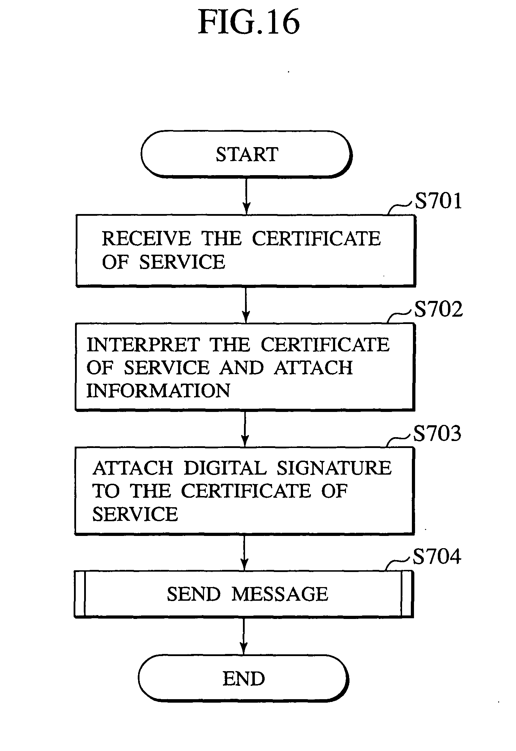

As shown in FIG. 16, in case wherein plural uses are allowed for the certificate of service 120, it is possible to arrange the authentication and payment device 101 to update the certificate of service 120 as follows. When the certificate of service 120 from the terminal 102 is received (step S701), the authentication and payment device 101 reduces the reference amount described therein (step S702), attaches the digital signature of the service providing device 103 thereto (step S703) and sends back to the terminal 102 (step S704).

In case wherein plural uses of the certificate of service are allowed and the service providing device 103 operates the lump-sum processing, there is a possibility of over use beyond ability to pay by the user of the terminal 102 because the authentication and payment device 101 cannot perfectly grasp situations of usage of the certificate of service.

In order to solve this problem, it is possible to arrange the certificate of service to indicate the maximum amount of money and/or the maximum number of usage allowable by itself, and the terminal 102 to manage the history of usage of the certificate of service and acknowledge to the authentication and payment device 101 when usage of the user exceeds the maximum amount of money or the maximum number of usage. In this case, the authentication and payment device 101 updates the certificate of service when it receives the acknowledgement from the terminal 102. It is further possible to arrange the terminal 102 to send to the authentication and payment device 101 a history of usage of the certificate of service with the acknowledgement set forth above, and to update the information according to an indication from the authentication and payment device 101. Adoption of this method of processing can lighten the risk imposed on the authentication and payment device 101.

## Claims

1. A method of authentication and payment in an authentication and payment system that has a terminal, at least one server and a network connecting these terminal and server, the method that is carried out by the server comprising the steps of:
receiving a request for usage of a service from the terminal through the information network;
selecting at least one situation from a plural situations of a content described in a service certificate sent from the terminal, a network environment and a system policy; and
changing a service procedure and/or a message format to operate the authentication and payment system according to the selected situation.

2. A terminal comprising:
a receiver configured to receive a first certificate of service including related information from an authentication and payment device through an information network; and
a transmitter configured to manipulate the first certificate of service to generate a second certificate of service including identification information of the terminal and to transmit the second certificate of service to a service providing device through the information network.

3. A terminal in accordance with claim 2, wherein the second certificate of service is generated from all or a part of the first certificate of service; from all or a part of the first certificate of service and a piece of new information added thereto; from all or a part of the first certificate of service and a digital signature added thereto; or from all or a part of the first certificate of service and the piece of new information and the digital signature added thereto.

4. A terminal in accordance with claim 3, wherein the second certificate of service is generated from identification information including at least one of an identifier of certification, an identifier of an authentication and payment device and a digital signature of the authentication and payment device, which are extracted from the first certificate of service, form the identification information and a piece of new information added thereto, or from the identification information and the piece of new information and a digital signature added thereto.

5. A terminal comprising:
usage history managing means configured to manage a usage history of a certificate of service distributed from an authentication and payment device through an information network; and
acknowledgement means configured to acknowledge to the authentication and payment device when the usage history satisfies conditions defined in the certificate of service.

6. A service providing device comprising:
a receiver configured to receive a certificate of service sent from a terminal through an information network; and
a transmitter configured to transmit a request for authentication and payment itself or wih a digital signature to an authentication and payment device through the information network, and
wherein the request for authentication and payment is to be formed from all or a part of the certificate of service or from all or a part of the certificate of service and a piece of new information added thereto.

7. A service providing device in accordance with claim 6, wherein the request for authentication and payment is formed from identification information including at least one of an indentifier of the certificate of service, an identifier of the authentication and payment device and a digital signature of the authentication and payment device, which are extracted from the certificate of service, or from the identification information and a piece of new information added thereto; and the request for authentication and payment is to be transmitted itself or with a digital signature added thereto.

8. A service providing device in accordance with claim 7, further comprising:
a controller configured to select timing of providing a service in response to the request from the terminal or timing of processing the request for authentication and payment to the authentication and payment device, or configured to simplify the processing of the request for authentication and payment.

9. A service providing device in accordance with claim 7, further comprising:
another receiver configured to receive a first certificate of service from the terminal through the information network; and
another transmitter configured to generate a second certificate of service by adding a piece of new information to the first certificate of service and to transmit the generated second certificate of service to the terminal through the information network.

10. An authentication and payment device comprising:
certificate of service issuing means for issuing a certificate of service to other device; and
processing means for processing at least one of verification of a request for authentication and payment sent from other device through an information network, authentication of the received request for authentication and payment, permission for provision of service that is requested by the request for authentication and payment, and payment for the provision of service.

11. An authentication and payment device in accordance with claim 10, wherein the certificate of service contains at least one piece of information of an identifier of the certificate of service, an identifier of the authentication and payment device, an identifier of the other device, information of expiration date of the certificate of service, and information of constraint of service to the other device.

12. An authentication and payment device in accordance with claim 10, further comprising:
information storing means for storing all or a part of information which is inherently to be contained in the certificate of service as a stored information, and
wherein the certificate of service contains information of a location of the stored information in the information storing means.

13. An authentication and payment device in accordance with claim 10, further comprising:
a transmitter configured to transmit the certificate of service to the other device in response to a request therefrom or in accordance with a predetermined condition for transmission.

14. An authentication and payment device in accordance with claim 13, wherein the certificate of service issuing means updates a content of the certificate of service along with an update of information under control of the authentication and payment device, and the transmitter transmits the updated certificate of service to the other device.

15. An operation method of an authentication and payment system including a terminal, a service providing device, an authentication and payment device and an information network connecting these devices, comprising the steps of:
receiving a request for use of a service from the terminal through the information network;
analyzing a content of a certificate of service to be sent to the terminal, a network environment and/or a system operation policy; and
adapting service procedures and/or message formats to at least one of plural situations of the content of the certificate of service, the network environment and the system operation policy.

16. A control information providing device comprising:
receiving means of a request for use of a service;
analyzing means of a content of a certificate of service, a network environment and/or a system operation policy; and
control information generating means configured to generate control information adaptive to at least one of plural situations of the content of the certificate of service, the network environment and the system operation policy.

17. A control information providing device in accordance with claim 16, further comprising:
open means configured to open the control information generated by the control information generating means to the information network.

18. A control information providing device in accordance with claim 16 or 17, wherein the control information contains a piece of information of an identifier.
